(19) Europäisches Patentamt
European Patent Office
Office européen des brevets

(11) **EP 2 593 292 B1**

(12) **EUROPÄISCHE PATENTSCHRIFT**

(45) Veröffentlichungstag und Bekanntmachung des Hinweises auf die Patenterteilung:
**25.12.2013  Patentblatt 2013/52**

(21) Anmeldenummer: **11782011.8**

(22) Anmeldetag: **10.07.2011**

(51) Int Cl.:
***B29C 67/00*** *(2006.01)*

(86) Internationale Anmeldenummer:
**PCT/DE2011/001440**

(87) Internationale Veröffentlichungsnummer:
**WO 2012/028129 (08.03.2012 Gazette 2012/10)**

(54) **VORRICHTUNG ZUM HERSTELLEN DREIDIMENSIONALER MODELLE MITTELS SCHICHTAUFTRAGSTECHNIK**

APPARATUS FOR PRODUCING THREE-DIMENSIONAL MODELS BY MEANS OF A LAYER BUILD-UP TECHNIQUE

DISPOSITIF DE FABRICATION DE MODÈLES TRIDIMENSIONNELS PAR SUPERPOSITION DE COUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2010  DE 102010027071**

(43) Veröffentlichungstag der Anmeldung:
**22.05.2013  Patentblatt 2013/21**

(73) Patentinhaber: **Voxeljet AG**
**86316 Friedberg (DE)**

(72) Erfinder: **HARTMANN, Andreas**
**86391 Stadtbergen (DE)**

(74) Vertreter: **Helbig, Christian**
**Wagner + Helbig**
**Patentanwälte**
**Pfarrstrasse 14**
**80538 München (DE)**

(56) Entgegenhaltungen:
**EP-A1- 1 872 928     WO-A2-2005/097476**

**Beschreibung**

Die Erfindung bezieht sich auf eine Vorrichtung zum Herstellen dreidimensionaler Modelle mittels Schichtauftragstechnik gemäß dem Oberbegriff des Patentanspruches 1.

In der europäischen Patentschrift EP 0 431 924 B1 wird ein Verfahren zur Herstellung dreidimensionaler Objekte mittels Schichtauftragstechnik aus Computerdaten beschrieben. Dabei wird ein Partikelmaterial in einer dünnen Schicht auf eine Plattform aufgetragen und dieses selektiv mittels eines Druckkopfes mit einem fluiden Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

Daneben sind Schichtbauverfahren beziehungsweise Verfahren zum Aufbauen von Modellen mittels Schichtaufbautechnik bekannt, die das Baumaterial für die gewünschten Objekte vollständig über Druckköpfe dosieren. Aus der WO200168375A2 ist beispielsweise ein Verfahren bekannt, bei dem ein lichthärtendes Material über eine Vielzahl einzeln ansteuerbarer Düsen auf einen Zielbereich dosiert wird und dieser Bereich während des Drucks mit einer Lichtquelle verfestigt wird. Neben dem eigentlichen Objektmaterial wird gemäß diesem beschriebenen Verfahren ein weiteres Material ebenfalls über einen oder mehrere Druckköpfe dosiert, das als Stützmaterial für überhängende Objektstrukturen dient.

EP-A-1872928 zeigt eine Vorrichtung gemäß dem Oberbegriff des Anspruchs 1.

Im Folgenden werden alle diese Verfahren unter dem Begriff "dreidimensionale Druckverfahren", 3D-Druckverfahren oder Verfahren mittels Schichtauftragstechnik zusammengefasst.

Bei 3D-Druckverfahren werden Düsen für einen tröpfchenförmigen Materialauftrag verwendet, die üblicherweise in Druckköpfen zusammengefasst sind. In solchen 3D-Druckverfahren eingesetzte Druckköpfe bestehen in der Regel aus mehreren Komponenten. Einen wesentlichen Bestandteil bilden dabei sogenannte Druckmodule mit einer begrenzten Anzahl einzeln ansteuerbarer Düsen. Die Düsen arbeiten nach einem Drop-On-Demand Prinzip mit üblicherweise piezoelektrischen Aktuatoren, die bei Anlegen eines entsprechenden Stromimpulses zum Ausstoß eines Tropfens pro angesteuerter Düse führen. Die Tropfen sind dabei relativ klein und weisen Durchmesser von zum Teil weniger als 50 $\mu$m auf.

Die Druckmodule verfügen neben den elektrischen Anschlüssen auch über eine Fluidzuleitung, die in der Regel zu einem Fluidreservoir führt, das sich vorzugsweise oberhalb der Düsen befindet. Die Druckmodule befinden sich in einer Aufnahme, die eine genaue Ausrichtung mehrerer Module zueinander zulässt.

Aus der Größe der Tropfen ist ersichtlich, dass die Abweichung der Düsenpositionen zueinander in jedem Fall deutlich kleiner sein muss als der Tropfendurchmesser und damit in der Regel nur wenige $\mu$m beträgt. Eine Aufnahme sollte daher möglichst steif ausgeführt sein, um statisch und dynamisch eine einmal gewählte Positionierung der Druckmodule genau beizubehalten zu können.

Die Anforderungen an die Steifigkeit einer solchen Aufnahme sind in diesem Fall sehr hoch, da sich eine Verbiegung der Aufnahme um wenige $\mu$m bereits in einer unakzeptablen Verschiebung der Druckmodule zueinander äußern würde.

Daneben verfügt ein Druckkopf über Sensoren zur Detektion der Fluidtemperatur, eventuell Einrichtungen zum Temperieren der Module und des Fluides, Sensoren zur Füllstandskontrolle und Elektronik zur Verarbeitung der elektrischen Signale.

Aus alledem ist leicht ersichtlich, dass der gesamte Druckkopf eine nicht unerhebliche Masse aufweist. Diese Masse wird über einen sogenannten Druckkopfhalter aufgenommen, der den Druckkopf, je nach Ausführung des Gerätes, mit dem Gestell oder dem bewegten Schlitten einer Bewegungseinheit verbindet.

Weiterhin ist es erwünscht, den Druckkopfhalter derart auszugestalten, dass der Druckkopf in alle Richtungen zum Baufeld ausgerichtet und der Abstand zum Baufeld eingestellt werden kann.

Dieser Abstand zum Baufeld beträgt in der Regel wenige mm, üblicherweise 1 bis 3 mm. Diesen Abstand überwinden die kleinen Tropfen mit einer Düsenaustrittsgeschwindigkeit von üblicherweise 5 - 10 m/s. Aufgrund der relativen Bewegung von Druckkopf zu Baufeld beim Beschreiben des Baufeldes entsteht eine Luftströmung parallel zum Spalt, die zum versetzten Auftreffen der Tröpfchen auf dem Baufeld führt. Ändert sich der Abstand des Druckkopfes zum Baufeld während eines Druckvorganges, ändert sich auch der Versatz. Tolerierbare Abweichungen liegen hier wieder im Bereich kleiner der Tropfengröße also im Bereich weniger $\mu$m. Insofern ist es wichtig, den Abstand genau einstellen zu können und über den gesamten Bauprozess zu halten.

Nach dem Stand der Technik werden die Druckköpfe zentral von standardisierten Positioniertischen zur Höheneinstellung und Goniometern zur Winkeleinstellung aufgenommen. Die Anbindung an eine Verfahreinheit erfolgt dabei beispielsweise über einen Metallwinkel.

Der Metallwinkel ist horizontal drehbar gelagert und über eine Einbaumessschraube einstellbar.

Weitere werkzeuglos einstellbare Druckkopfhalterungen sind beispielsweise aus der DE69707192 T2 oder der DE 69012292 T2 bekannt, die sich aber auf kompaktere und leichtere Druckköpfe, die in einer wenig aggressiven Medienumgebung arbeiten, beschränken. Andere Halterungen, wie beispielsweise in der DE 4005340 C2 beschrieben, beziehen sich auf ortsfeste Druckköpfe.

Die Druckköpfe werden beim Auftragsprozess meist über lineare Verfahrsysteme über das Baufeld bewegt beziehungsweise das Baufeld bewegt sich unter den stehenden Druckköpfen hindurch. Je nach Anzahl der Düsen, Größe des Baufeldes und gewünschter Auflösung sind unterschiedlich viele zeitintensive Bewegungsvorgänge notwendig, um mit den Druckköpfen das Baufeld vollständig zu beschreiben. Es liegt daher nahe, die Auftragsgeschwindigkeit zu steigern, indem die Anzahl der Düsen erhöht wird.

Nur ein Druckweg ist beispielsweise dann nötig, wenn sich der Druckkopf über eine gesamte Seite des Baufeldes erstreckt und die Zahl und Anordnung der Düsen ausreicht, um die gewünschte Auflösung zu erzielen. Vorteilhaft ist deshalb die Verwendung eines möglichst großen Druckkopfes mit vielen Düsen und damit einer großen Schreibbreite, der einen möglichst großen Teil einer Seite des Baufeldes abdeckt und bedrucken kann.

Die Schreibbreite des Druckkopfes hat aufgrund der Steifigkeitsanforderungen innerhalb des Druckkopfes beziehungsweise der notwenigen Aggregate im Druckkopf direkte Auswirkung auf die Dimension und Masse des Druckkopfes, wie oben auch schon näher ausgeführt wurde. Das Verhältnis Druckkopfmasse zu Schreibbreite steigt mit zunehmender Druckkopfbreite von 7 cm auf 100 cm konstruktiv bedingt von ca. 0,3 kg/cm auf etwa 1 kg/cm.

Die Anforderungen an die Steifigkeit und Einstellbarkeit einer Druckkopfhalterung steigen damit mit der Erhöhung der Schreibbreite erheblich. Bei entsprechender Ausdehnung der Schreibbreite des Druckkopfes im Bereich von mehr als 100 mm, können Druckkopfhalterungen nach dem Stand der Technik nicht mehr eingesetzt werden.

Eine Halterung nach dem Stand der Technik mit einem Positioniertisch ist nicht eigensteif, und kann die entstehenden Prozesskräfte eines schweren Druckopfes nicht übertragen. Weiter sind derartige Positioniertische durch ihre aufwendige Führungen und Gewindespindeln sehr anfällig gegen Verschmutzung. Eine sichere Klemmung ist meist nicht möglich.

Eine Winkeleinstellung mit Goniometer sollte sinnvoller Weise nur an einem Punkt vorgenommen werden. Eine Aufhängung an nur einem Punkt, lässt sich durch die großen Hebelkräfte nur mit einer überdimensionierten, schweren Aufhängung realisieren. Weiter kann eine zentrale Anordnung nur zwischen Lineartisch und Druckkopf stattfinden, was den Apparat unnötig vergrößert.

Die Momentenbelastung auf die Druckkopfhalterung ist durch die hohen Beschleunigungswerte und bei hoher Druckkopfmasse derart hoch, dass der Druckopf durch seine Breite nicht mehr zentral aufgehängt werden kann.

Die Einstellvorrichtung muss derart massiv ausgeführt werden, dass sie den hohen Kräften standhält und dennoch fein justiert werden kann. Dabei muss die Halterung auch so steif ausgeführt sein, dass sich keine störenden Schwingungen einstellen können.

Da die Zugänglichkeit eines Druckkopfes in einer Maschine begrenzt ist, muss der Einstellvorgang leicht und schnell von statten gehen.

Dazu muss die Einstellsituation gut ersichtlich sein, und sich auf wenige intuitive Handgriffe, mit wenigen einheitlich Werkzeuge reduzieren.

Um bleibende Druckqualität zu gewährleisten dürfen sich die Einstellungen auch keinesfalls nachträglich ändern. Die Klemmtechnik des Einstellapparates darf in diesem Fall die Einstellungen nicht beeinflussen. Klemm- und Einstellrichtung müssen dazu voneinander getrennt sein.

Weiter muss die Klemmung so fest sein, dass die Prozesskräfte und evtl. auftretenden Schwingungen die eingestellten Werte nicht beeinflussen können.

Es ist daher Aufgabe der vorliegenden Erfindung eine Druckkopfhalterung für ein 3D-Druckgerät zur Verfügung zu stellen, die für Druckköpfe mit einer Schreibbreite von mehr als 100 mm eine einstellbare und steife Anbindung an eine Verfahreinheit oder ein Gestell gewährleistet.

Die Aufgabe wird erfindungsgemäß einer Vorrichtung nach Patentanspruch 1 gelöst.

Gemäß der vorliegenden Erfindung wird nun also eine Vorrichtung zum Herstellen dreidimensionaler Modelle mittels Schichtauftragstechnik bereitgestellt, bei der mindestens ein Druckkopf zum selektiven tropfenweisen Dosieren mindestens eines Materials auf eine Zielfläche vorgesehen ist. Der Druckkopf steht dabei an zwei beabstandeten Punkten mit einer Aufnahme in Eingriff. Weiterhin ist über diese beiden Punkte Lage und Ausrichtung des Druckkopfes relativ zur Zielfläche in allen Raumrichtungen stufenlos einstellbar und die Aufnahme und die Zielfläche sind relativ zueinander verschiebbar.

Hierbei ist gemeint, dass entweder der Druckopf einen relativ zur Zielfläche verschieblichen Bewegungsmechanismus in Zielflächenebenenrichtung aufweist oder aber die Zielfläche relativ zum Druckkopf in Zielflächenebenenrichtung verschiebbar ist.

Unter Aufnahme ist hier nicht notwendigerweise ein einziges Bauteil zu verstehen. Eine Aufnahme kann gemäß der vorliegenden Erfindung aus verschiedenen Bauteilen zusammengesetzt sein. Gegebenenfalls kann die Einheit auch Aufnahmeapparat genannt werden.

Die Punkte bezeichnen örtlich begrenzte Bereichein denen die Lage des Druckkopfes auf relativ einfache Art und Weise eingestellt werden kann.

Vorzugsweise steht hierbei der Druckkopf an einer eigensteifen Platte außerhalb des Druckbereiches mittels zweier Aufnahmeglieder in den Punkten mit der Aufnahme in Eingriff.

Mit einer solchen vorzugsweisen Ausgestaltung der Erfindung wird es möglich, die Vorrichtung besonders einfach auf und abzubauen. Die Anbindung über nur zwei Punkte beziehungsweise Bereiche ermöglicht, dass jede Einstellung eindeutig darstellbar ist und statisch bestimmt fixiert werden kann.

Sind gemäß einer besonders bevorzugten Ausgestaltung der Erfindung die Aufnahmeglieder drehbar in den Aufnahmepunkten gelagert, insbesondere als Rundstangen ausgebildet, so kann die Einstellbarkeit sehr effektiv erreicht werden.

Eine besonders steife Ausgestaltung der erfindungsgemäßen Vorrichtung kann erreicht werden, wenn die Aufnahmeglieder fest mit der Aufnahme verbunden sind.

Eine noch bessere und einfachere Einstellbarkeit der Düsenplatte kann gemäß einer besonders bevorzugten Ausführungsform der vorliegenden Erfindung häufig erreicht werden, wenn die Aufnahmeglieder mit zur Platte im Wesentlichen parallel angeordneten Hebelarmen in Eingriff stehen.

Weiterhin kann es auch vorteilhaft sein, wenn bei einer erfindungsgemäßen Vorrichtung die Hebelarme jeweils in einer Ebene der Düsenplatte bezüglich des Winkels und senkrecht zur Ebene der Düsenplatte frei und stufenlos einstellbar sind.

Besonders bevorzugt können zur Einstellung der Lage und Ausrichtung des Druckkopfes relativ zur Zielfläche die Hebelarme mit den Aufnahmegliedern verklemmt werden.

Gemäß einer bevorzugten Ausführungsform der Erfindung kann daher eine Vorrichtung mit einem Einstellapparat vorgesehen sein, bei dem zwei Rundstangen seitlich den Druckkopf in den Aufnahmepunkten halten und selbst in auskragenden Hebeln in allen Richtungen einstellbar gelagert sind.

Da mit der Masse des Druckkopfes die Beschleunigungswege und damit auch die Maschinenabmessungen zunehmen und der Druckkopf möglichst breit gewählt wird, liegt hohe Priorität in einem niedrigen Gewicht der Druckkopfhalterung, was gemäß einer Vorrichtung der vorliegenden Erfindung erzielt wird.

Da das Verhältnis von Steifigkeit und Gewicht der Vorrichtung möglichst hoch sein sollte, wird gemäß der vorliegenden Erfindung ein Einstellapparat mit wenigen, multifunktionalen und steifen Teilen bereitgestellt.

Um die Maschinenabmessungen klein zu halten, muss auch die Druckkopfhalterung möglichst platzsparend ausgestaltet sein. Der Einstellapparat gemäß der vorliegenden Erfindung ist daher kompakt und liegt nicht wie bei Halterungen nach dem Stand der Technik zwischen Druckkopf und dem Schlitten.

Dadurch, dass die Halterung und Druckkopf modular austauschbar aufgebaut sind, wird eine hohe Verfügbarkeit der Anlage gesichert. Zur Gewährleistung einer schnellen Austauschbarkeit, ist der Druckkopf nach einer Ausgestaltung der vorliegenden Erfindung samt Halterung leicht von der Verfahreinheit oder dem Gestell trennbar, da der Einstellapparat wenige, leicht lösbare Verbindungen aufweist.

Durch den unkomplizierten, offenen und leicht zu reinigenden Aufbau der Vorrichtung nach einer Ausführungsform der Erfindung kann der Druckkopf neben den aggressiven flüssigen Druckmedien gegebenenfalls auch den zu bedruckenden Medien wie beispielsweise feinen, abrasiven Pulvermaterialien problemlos ausgesetzt werden.

Die Vorrichtung nach der vorliegenden Erfindung ist kostengünstig realisierbar und gut verfügbar, da die Funktionsbauteile leicht in gängigen Fertigungsverfahren herstellbar sind.

Zur näheren Erläuterung wird die Erfindung anhand bevorzugter Ausführungsbeispiele in den folgenden Zeichnungen dargestellt.

In der Zeichnung zeigt dabei:

Figur 1 eine seitliche Ansicht eines Druckkopfes mit Halterung nach dem Stand der Technik;

Figur 2 eine Ansicht von oben eines Druckkopfes mit Halterung nach dem Stand der Technik;

Figur 3 einen Schrägriss eines Druckkopfes mit Halterung nach dem Stand der Technik;

Figur 4 eine Darstellung der Anordnung der Bewegungsachsen eines Druckkopfes gemäß einer bevorzugten Ausführungsform der Erfindung;

Figur 5 eine Schnittdarstellung durch eine Hälfte eines Einstellapparates beziehungsweise einer Haltevorrichtung einer bevorzugen Ausführungsform der erfindungsgemäßen Vorrichtung;

Figur 6 eine Seitenansicht einer Hälfte des Einstellapparates beziehungsweise der Haltevorrichtung nach Figur 5;

Figur 7 eine vergrößerte Darstellung der Schnittdarstellung durch eine Hälfte des Einstellapparates beziehungsweise der Haltevorrichtung nach Figur 5;

Figur 8 eine weitere Schnittdarstellung des Einstellapparates nach Figur 5;

Figur 9 einen Schrägriss des Einstellapparates beziehungsweise der Haltevorrichtung mit Kennzeichnung der Freiheitsgradenach Figur 5; und

Figur 10 eine modellhafte Darstellung der Lagersituation der Einstellvorrichtung nach Figur 5.

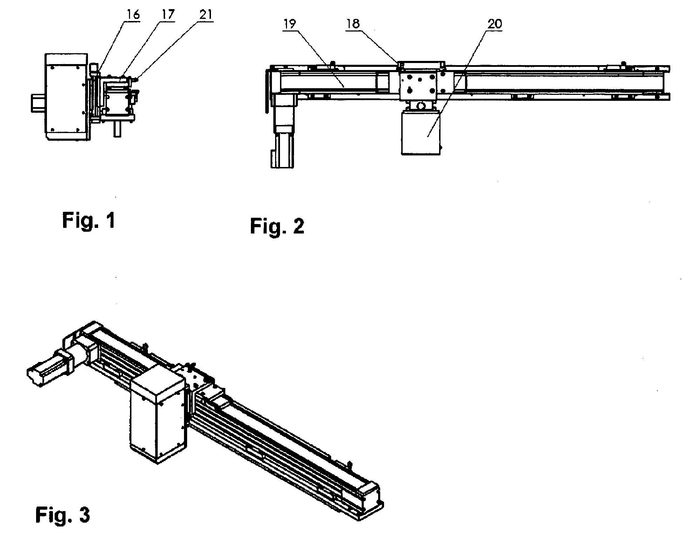

Figur 1,2 und 3 zeigen einen Aufbau eines Druckkopfes in einer Vorrichtung zum schichtweisen Aufbau von Modellen nach dem Stand der Technik.

Der Druckkopf 20 wird hier mit einer Lineareinheit 19, bestehend aus Antrieb und Führung, über eine Zielfläche bewegt. Die Einstellung des Druckkopfes 20 senkrecht zur Zielfläche erfolgt über einen handelsüblichen Positioniertisch 16.

Die Aufnahme an der Lineareinheit 19 ist aus einem Metallwinkel 17 gebildet. Der Metallwinkel 17 ist in der Aufnahme drehbar gelagert und über eine Einbaumessschraube 21 einstellbar, so dass der Winkel des Druckkopfes 20 in der Düsenplattenebene über die Winkelverstellung 18 eingestellt werden kann. Weitere Einstellmöglichkeiten bestehen bei einer solchen Vorrichtung nach dem Stand der Technik nicht.

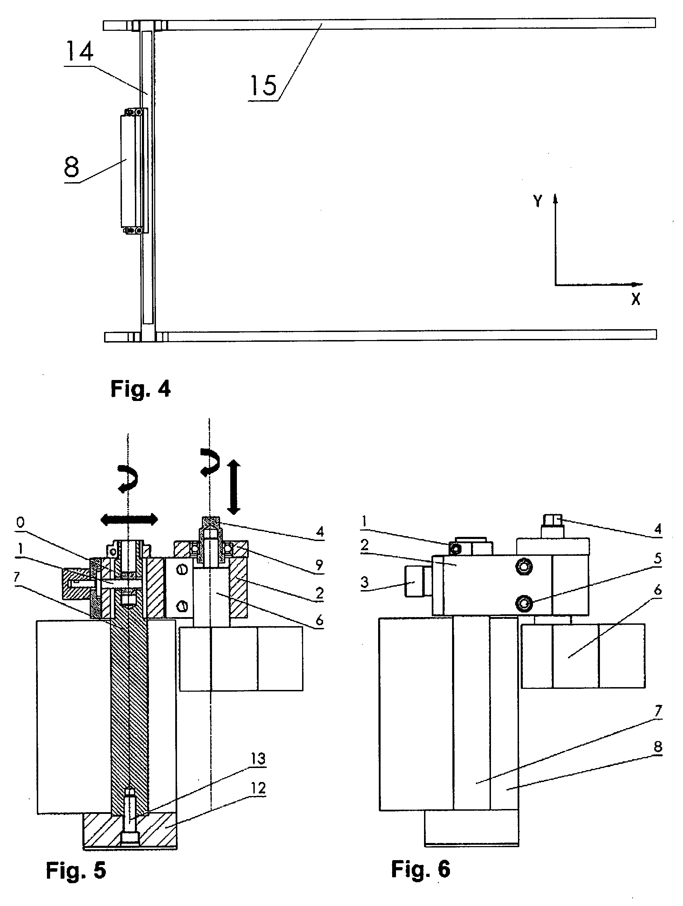

Figur 4 zeigt die Draufsicht auf eine Ausführungsform der erfindungsgemäßen Vorrichtung. Ein Druckkopf 8 ist auch in diesem Fall an einer Lineareinheit 14 befestigt, die zusammen mit einem weiteren Lineareinheiten-Achsenpaar 15 ein orthogonal ausgerichtetes Portal ergeben. Damit kann die innerhalb des Portals liegende Zielfläche beschrieben beziehungsweise bedruckt werden.

Während eines Aufbauprozesses mittels Schichtaufbautechnik wird der Druckkopf 8 zuerst auf der Lineareinheit 14 auf einen ersten Druckstreifenbereich positioniert. Im nächsten Prozessschritt verfährt das Achsenpaar 15 die Achse 14 mit konstanter Geschwindigkeit über die Zielfläche. Dabei wird ein Streifen, der ungefähr der Druckkopfbreite entspricht selektiv bedruckt. Vor der Rückfahrt des Druckkopfes auf der Druckachse 14 wird der Druckkopf 8 mit der Lineareinheit 15 um eine Druckstreifenbreite versetzt.

Der Druckkopf 8 ist über eine Halterung fest mit dem bewegten Schlitten der Achse 14 verbunden. Für ein optimales Druckbild muss die Düsenreihe im Druckkopf 8 exakt senkrecht zur Druckrichtung (X-Richtung) ausgerichtet werden. Weiter müssen der Abstand und die Parallelität der Düsenplatte zur Zielfläche exakt einstellbar sein.

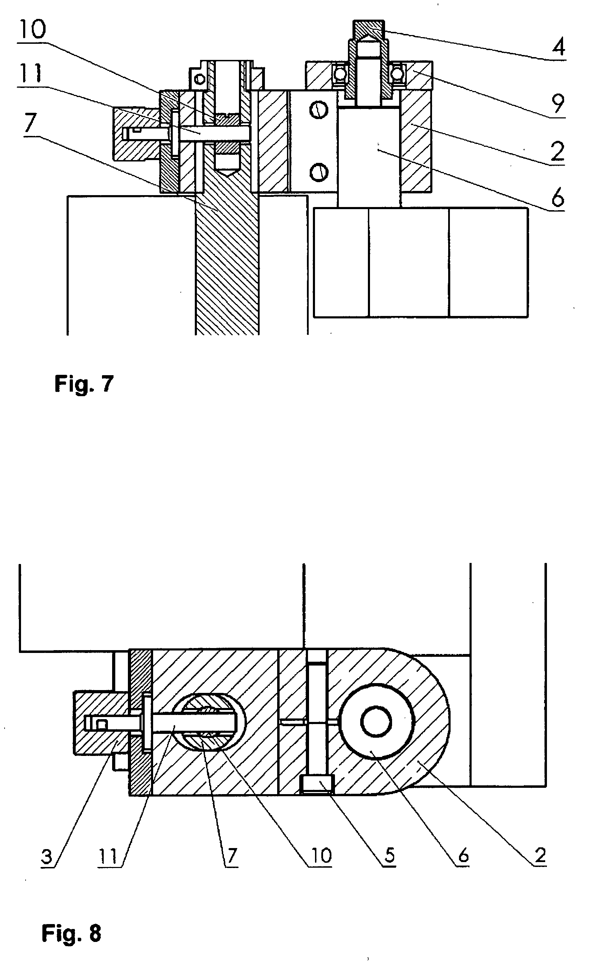

Bezugnehmend auf die Figuren 5 bis 10 wird eine bevorzugte Ausführungsform der vorliegenden Erfindung näher erläutert.

Gemäß der gezeigten bevorzugten Ausführungsform wird der Druckkopf 8 unten an einer eigensteifen Düsenplatte 12, in diesem Fall auch dem Schwerpunkt von massiven Rundstangen 7 in zwei beabstandeten Punkten 22 aufgenommen.

Für eine stabile Anbindung der Rundstangen 7 an die Düsenplatte 12 sind runde Passungen in der Düsenplatte 12 vorgesehen. Weiter wird jede Stange 7 mit einer einzelnen Schraube 13, leicht zugänglich von unten durch die Düsenplatte 12 verschraubt.

Mit einer solchen Ausgestaltung der erfindungsgemäßen Vorrichtung wird eine einfache, kostengünstige, stabile, hochsteife Verbindung bei schneller Demontagemöglichkeit des Druckkopfes 8 von der Druckkopfhalterung 12 gewährleistet. Dabei bildet der in Figur 23 gezeigte Bereich die Aufnahme 23.

Die Stangen 7, und damit auch der gesamte Einstellapparat werden seitlich des Druckkopfes 8 angeordnet. Damit wird Platz in Druckrichtung eingespart und ein kompakter, gut zugänglicher Systemaufbau ermöglicht.

Die Rundstangen 7 sind durch ihre Formgebung drehbar in Hebelarmen 2 gelagert. Die Hebelarme 2 sind seitlich, oberhalb der Düsenplatte 12 angeordnet.

Die Stange 7 zeichnet sich damit gleichzeitig als Bindeglied und Einstellkomponente aus und kommt so der Anforderung möglichst weniger und gut reinigbarer Komponenten nach.

Die Stangen 7 verfügen gemäß der gezeigten bevorzugten Ausführungsform oberhalb des Hebelarmes 2 über Gewinde, so dass sie über klemmbare Muttern 1 in den Hebelarmen 2 in alle Richtungen, torsionsfrei fixiert werden können.

Jeder Hebelarm 2 ist an der den Rundstangen 7 abgewandten Seite drehbar auf einem Haltezylinder 6 gelagert. Auf dieser Seite ist eine geschlitzte zylindrische Bohrung im Hebelarm 2 vorgesehen und kann daher mit Schrauben 5 klemmbar ausgeführt werden. Mit dieser Klemmung kann eine vorgenommene Einstellung des Druckkopfes 8 einflussfrei gesichert werden.

Beide Haltezylinder 6 sind steif mit einem Schlitten der Verfahreinheit 14 verbunden. Hierbei kann über ein Einstellrad 3 eine horizontale Verschiebung stattfinden.

Lösung und Feststellen einer Druckkopfposition:

1. Höhenverstellung

Die Haltezylinder 6 verfügen an Ihrer Oberseite über einen Bolzen mit einem Außengewinde.

Eine Einstellmutter 4 stützt sich am Gewindebolzen des Haltezylinders 6 ab, und trägt den Hebelarm 2 über ein mit ihm fest verbundenes Axiallager 9.

Durch Herausdrehen der Mutter 4 wird der Abstand des Druckkopfs 8 zum Baufeld beziehungsweise der Zielfläche vergrößert. Nach Einstellung der Höhe wird der Hebelarm 2 über die Klemmschrauben 5 fest am Haltezylinder 6 fixiert. Die Klemmbewegung weicht von der Einstellrichtung ab und kann so eine vorgenommene Einstellung nicht beeinflussen.

Wird die Anbindung der Haltezylinder 6 an der Düsenplatte 12 als Gelenklager, das heißt die Beweglichkeit beträgt nach Grübler drei, ausgeführt, ist eine weite horizontale Winkeleinstellung der Düsenplatte 12 zur Unterseite möglich. Dazu wird dann nur ein Hebelarm 2 in der Höhe verstellt.

Ist der Abstand zwischen den beiden Hebelarmen 2 ausreichend groß, ist ebenfalls eine Winkeleinstellung möglich.

Da üblicherweise nur kleine Winkel eingestellt werden, ist eine geringe Verwindung des Apparates akzeptabel.

2. Winkelverstellung

Für eine hohe Auflösung des Druckbildes werden die in Druckrichtung hintereinander liegenden Düsen an der Druckkopfunterseite genau zueinander ausgerichtet.

Zur Ausrichtung der Düsen muss dazu der Winkel des Druckkopfs 8 zur Verfahrrichtung eingestellt werden.

In der vorliegenden Ausführung ist bei mindestens einem Hebelarm 2, die Aufnahmebohrung für die Rundstange 7 als Langloch in Hebelrichtung ausgeführt. In diesem Langloch wird die Rundstange 7 spielfrei geführt. Die Rundstange 7 ist durch ihre Außenkontur für eine Winkeleinstellung im Langloch um ihre Achse drehbar gelagert.

Zur genauen stufenlosen Einstellung trägt die Rundstange 7 in einer axialen Bohrung ein Zylinderstück 10, das quer zu seiner Achse ein Gewinde aufweist.

Am Hebelarm 2 ist ein Stellbolzen 11 axial spielfrei gelagert, mit dessen Feingewinde die Position der Rundstange 7 im Hebelarm 2 über das Zylinderstück 10 stufenlos eingestellt wird.

Die Rundstange 7 ist dazu so am Umfang geschlitzt, dass das Gewinde des Zylinderstücks 10 vom Stellbolzen 11 erreichbar ist.

Zusammenfassend ist die Vorrichtung so gestaltet, dass sie bei der horizontalen Einstellung statisch bestimmt gelagert ist.

Dies kann mit Hilfe der so genannten Grüblergleichung erfolgen. Diese lautet:

$$F = B \cdot (n - 1 - g) + \sum b_i + \sum s_i$$

Dabei bedeuten die einzelnen Zeichen:

F: Freiheitsgrad
B: Bewegungstyp (B = 3 für ebene Anordnungen)
G: Anzahl der Gelenke
bi: Beweglichkeit des Gelenks i
si: eingehaltene Sonderabmessungen
n: Anzahl der Elemente

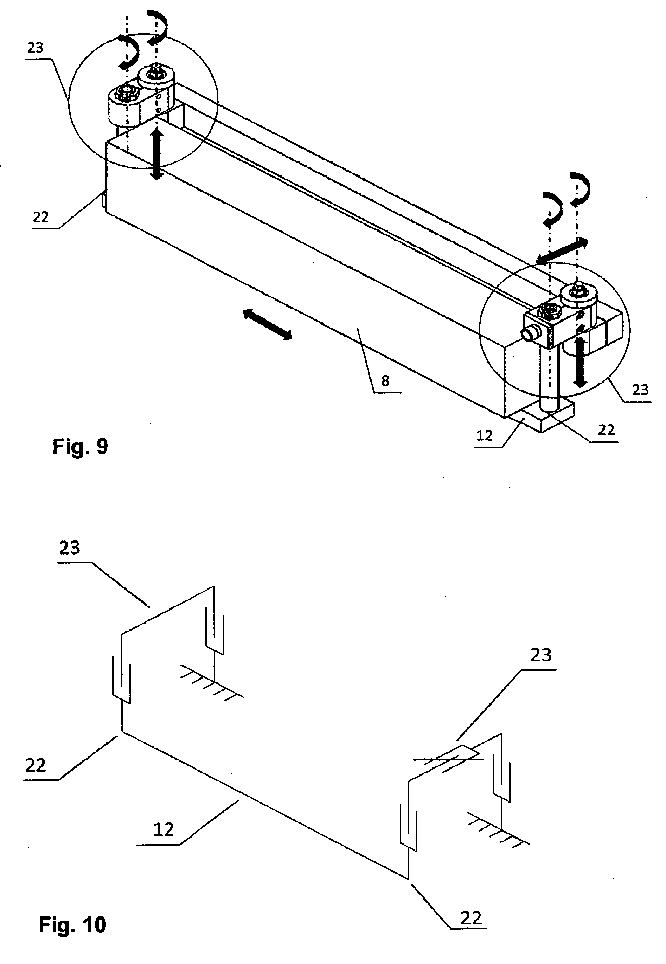

Betrachtet man die Lagerung der Haltevorrichtung im offenen Zustand nach obiger Gleichung ohne die vertikale Beweglichkeit zu berücksichtigen, so kann man eine horizontal statisch bestimmte Lagerung gemäß Figur 10 finden.

Der Druckkopf wird dabei von zwei Hebelarmen 2 gehalten, die an jedem Ende horizontal drehbar gelagert sind. Je ein Drehlager eines Hebelarms 2 ist auf einer Seite fest mit dem Druckkopf und auf der anderen Seite fest mit dem Schlitten der Druckkopfverfahreinheit verbunden.

Weiter ist mindestens einer der Hebelarme 2 als Linearlager mit einem Drehfreiheitsgrad ausgeführt.

Wird eines der Drehlager während der horizontalen Winkeleinstellung fixiert, ergibt sich folgende Lagersituation.

Die Gesamtzahl der vorliegenden in Verbindung stehenden Konstruktions-elemente beträgt dann 4, die Anzahl Gelenke 5. Die Grüblergleichung ergibt dann:

$$F = 5 \cdot (4 - 1 - 5) + 5 \cdot 1 = 1$$

Die gesamte Anordnung ist damit statisch bestimmt und bedarf keiner Sonderabmessungen.

Sind alle Positionen eingestellt wird die Haltevorrichtung über die Klemmschrauben 5 im Hebelarm 2 und über die Klemmmutter 1 an der Rundstange 7 fixiert.

Die Klemmrichtung ist unabhängig von der Einstellrichtung, so dass die vorgenommene Einstellung beim Klemmen nicht beeinflusst wird. Die Stangen 7 und Hebel 2 sind massiv und halten durch Ihre Form und die konstruktiv kurz gehaltenen Hebel hohen Biege und Torsionsmomenten stand.

Durch die Formgebung der Rundstangen 7 ist eine einfache gut ersichtliche Einstellung in alle Richtungen möglich.

Die Einstellvorrichtung reduziert sich auf wenige kompakte aber hochsteife Teile. Gute Zugänglichkeit bei kleinen Bauabmessungen und niedrigen Herstellungskosten werden damit möglich.

Der Einstellmechanismus ist kompakt, und kann resistent gegenüber den Prozessmedien ausgeführt werden. Alle Komponenten lassen sich gut reinigen.

Die Stangen 7 und damit der gesamte Einstellapparat werden seitlich des Druckkopfes angeordnet. Damit wird Bauraum in Druckrichtung gespart. Die Rundstangen 7 sind durch ihre Formgebung drehbar in Hebelarmen 2 gelagert. Die Stange zeichnet sich gleichzeitig als Bindeglied und Einstellkomponente aus.

Bezugszeichenliste

| 1  | Mutter         |
|----|----------------|
| 2  | Hebelarme      |
| 3  | Einstellrad    |
| 4  | Einstellmutter |
| 5  | Schraube       |
| 6  | Haltezylinder  |
| 7  | Stangen        |
| 8  | Druckkopf      |
| 9  | Axiallager     |
| 10 | zylinderstück  |

11   Stellbolzen
12   Düsenplatte
13   Schraube
14   Lineareinheit/Achse
15   Lineareinheiten-Achsenpaar
16   Positioniertisch
17   Metallwinkel
18   Winkelverstellung
19   Lineareinheit
20   Druckkopf
21   Einbaumessschraube
22   Punkte
23   Aufnahme

**Patentansprüche**

1. Vorrichtung zum Herstellen dreidimensionaler Modelle mittels Schichtauftragstechnik, wobei mindestens ein Druckkopf zum selektiven tropfenweisen Dosieren mindestens eines Materials auf eine Zielfläche vorgesehen ist, **dadurch gekennzeichnet, dass** der Druckkopf (8), an zwei beabstandeten Punkten (22) mit einer Aufnahme (23) in Eingriff steht, über diese beiden Punkte Lage und Ausrichtung des Druckkopfes (8) relativ zur Zielfläche in allen Raumrichtungen stufenlos einstellbar ist und die Aufnahme (23) und die Zielfläche relativ zueinander verschiebbar sind.

2. Vorrichtung nach Anspruch 1, **dadurch gekennzeichnet, dass** der Druckkopf (8) an einer eigensteifen Platte (12) außerhalb des Druckbereiches mittels zweier Aufnahmeglieder (7) in den Punkten mit der Aufnahme (23) in Eingriff steht.

3. Vorrichtung nach Anspruch 2, **dadurch gekennzeichnet, dass** die Aufnahmeglieder (7) drehbar in den Aufnahmepunkten (22) gelagert, insbesondere Rundstangen sind.

4. Vorrichtung nach Anspruch 3, **dadurch gekennzeichnet, dass** die Aufnahmeglieder (7) fest mit der Aufnahme (23) verbunden sind.

5. Vorrichtung nach einem der Ansprüche 2 bis 4, **dadurch gekennzeichnet, dass** die Aufnahmeglieder (7) mit zur Platte (12) im Wesentlichen parallel angeordneten Hebelarmen (2) in Eingriff stehen.

6. Vorrichtung nach Anspruch 5, **dadurch gekennzeichnet, dass** die Hebelarme jeweils in einer Ebene der Platte (12) bezüglich des Winkels und senkrecht zur Ebene der Platte (12) frei und stufenlos einstellbar sind.

7. Vorrichtung nach einem der Ansprüche 5 oder 6, **dadurch gekennzeichnet, dass** zur Einstellung der Lage und Ausrichtung des Druckkopfes (8) relativ zur Zielfläche die Hebelarme (2) mit den Aufnahmegliedern (7) verklemmt werden können.

**Claims**

1. A device for producing three-dimensional models by means of a layer build-up technique, wherein at least one print head is provided for selective, drop-wise metering of at least one material onto a target surface, **characterised in that** the print head (8) is in engagement with a receptacle (23) at two spaced-apart points (22), via which the position and orientation of the print head (8) with respect to the target surface are continuously adjustable in all spatial directions, and the receptacle (23) and the target surface are displaceable with respect to each other.

2. The device according to claim 1, **characterised in that** the print head (8) is in engagement with the receptacle (23) in said points on an inherently rigid plate (12) outside the printing area by means of two receiving members (7).

3. The device according to claim 2, **characterised in that** the receiving members (7) are rotatably supported in the receiving points (22) and are, in particular, round rods.

4. The device according to claim 3, **characterised in that** the receiving members (7) are fixedly connected to the receptacle (23).

5. The device according to any one of claims 2 to 4, **characterised in that** the receiving members (7) are in engagement with lever arms (2) which are arranged substantially parallel to the plate (12).

6. The device according to claim 5, **characterised in that** each lever arm is adjustable in terms of its angle in a plane of the plate (12) and is freely and continuously adjustable perpendicular to said plane of the plate (12).

7. The device according to any one of claims 5 or 6, **characterised in that** the lever arms (2) can be clamped together with the receiving members (7) in order to adjust the position and orientation of the print head (8) with respect to the target surface.

**Revendications**

1. Dispositif de fabrication de modèles tridimensionnels par superposition de couches, au moins une tête d'impression étant prévue pour le dosage goutte-à-goutte sélectif d'au moins un matériau sur une surface cible, **caractérisé en ce que** la tête d'impression (8) est en prise avec un réceptacle (23) en deux points écartés (22) au moyen desquels la position et l'orientation de la tête d'impression (8) par rapport à la surface cible sont réglables en continu dans toutes les directions spatiales, et **en ce que** le réceptacle (23) et la surface cible sont déplaçables l'un(e) par rapport à l'autre.

2. Dispositif selon la revendication 1, **caractérisé en ce que** la tête d'impression (8) est en prise avec le réceptacle (23) en ces points sur une plaque (12) à rigidité inhérente, en dehors de la zone d'impression, au moyen de deux éléments de réception (7).

3. Dispositif selon la revendication 2, **caractérisé en ce que** les éléments de réception (7) sont supportés en rotation dans les points de réception (22) et sont notamment des barres rondes.

4. Dispositif selon la revendication 3, **caractérisé en ce que** les éléments de réception (7) sont solidaires dudit réceptacle (23).

5. Dispositif selon l'une quelconque des revendications 2 à 4, **caractérisé en ce que** les éléments de réception (7) sont en prise avec des bras de levier (2) sensiblement parallèles à la plaque (12).

6. Dispositif selon la revendication 5, **caractérisé en ce que** les bras de levier sont chacun réglables en ce qui concerne leur angle dans un plan de la plaque (12) et sont réglables librement et en continu perpendiculairement audit plan de la plaque (12).

7. Dispositif selon l'une quelconque des revendications 5 ou 6, **caractérisé en ce que** les bras de levier (2) peuvent être serrés avec les éléments de réception (7) afin de régler la position et l'orientation de la tête d'impression (8) par rapport à la surface cible.

Fig. 1

Fig. 2

Fig. 3

EP 2 593 292 B1

**Fig. 4**

**Fig. 5**

**Fig. 6**

10

**Fig. 7**

**Fig. 8**

**Fig. 9**

**Fig. 10**

**IN DER BESCHREIBUNG AUFGEFÜHRTE DOKUMENTE**

**In der Beschreibung aufgeführte Patentdokumente**

- EP 0431924 B1
- WO 200168375 A2
- EP 1872928 A
- DE 69707192 T2
- DE 69012292 T2
- DE 4005340 C2